# EUROPEAN PATENT APPLICATION

(11) **EP 4 707 239 A1**
(43) Date of publication of application: **11.03.2026**
(21) Application number: 24797349.8
(22) Date of filing: 18.04.2024
(51) Int. Cl.: C01B 33/18, C09J 11/04, C09J 163/00, C08K 3/36, C08K 9/06

(54) **HIGHLY DISPERSED FUMED SILICA AND METHOD FOR PRODUCING SAME**

(30) Priority: 28.04.2023 KR 20230056428
(71) Applicant: OCI Company Ltd., Seoul 04532 (KR)
(72) Inventor: LEE, Hwiso, Seongnam-si Gyeonggi-do 13212 (KR); OH, Hwisu, Seongnam-si Gyeonggi-do 13212 (KR); LEE, Sangyup, Seongnam-si Gyeonggi-do 13212 (KR); LEE, Seun, Seongnam-si Gyeonggi-do 13212 (KR)
(74) Representative: Zacco Sweden AB
(86) International application number: PCT/KR2024/005261
(87) International publication number: WO 2024/225693

(57) **Abstract**

The present invention relates to a highly dispersed fumed silica and a method for producing same and, more specifically, to a highly functional fumed silica and a method for producing same, wherein the fumed silica, when mixed with an adhesive composition, has a particle size and particle size uniformity sufficient to exhibit high dispersibility, while imparting both a thickening effect and thixotropy.

## Description

### FIELD

The present disclosure relates to highly-dispersed fumed silica and a method for preparing the same, and more specifically, to highly-functional fumed silica which has a particle size and particle size uniformity capable of exhibiting high dispersibility when being mixed with an adhesive composition, and may also impart both a thickening effect and thixotropy, and a method for preparing the same.

### DESCRIPTION OF RELATED ART

Conventional sealants, adhesives, and the like are required to have high viscosity properties in order to prevent them from flowing down during application. An adhesive having a high viscosity is advantageous in maintaining its original shape after application, but there is a problem in that the coating property (application property) is deteriorated due to an excessively high viscosity. On the other hand, when using an adhesive having too low viscosity, the product flows down even after application, thus making it difficult to use the same in a desired range and shape. In particular, a special adhesive used in a structure such as a ship or an electric component is required to exhibit excellent adhesive strength and applicability while having high viscosity.

Accordingly, it is necessary to maintain a low viscosity when applying the adhesive composition and to maintain a high viscosity and thus to maintain a desired shape after the application. For this reason, attempts have been made to mix various additives with the adhesive composition in order to impart thixotropy. It is known that fumed silica is mixed with the adhesive composition to impart the thixotropy due to hydrogen bonding between oxide aggregates and van der Waals force.

However, when the fumed silica as a thixotropic agent for imparting the thixotropy to the adhesive composition is mixed with the adhesive composition, there is still a limitation in that dispersibility thereof is lowered in an adhesive resin that generally exhibits hydrophobicity due to the hydrophilic surface properties of the fumed silica.

A scheme for increasing the dispersibility thereof in the adhesive composition includes a technique for performing hydrophobic treatment on the surface of the fumed silica. In general, PDMS and the like which are used as a hydrophobizing surface treatment agent cause adhesion between adjacent silica aggregates due to its own surface adhesiveness, thereby causing a problem in that the particle size distribution of the fumed silica becomes non-uniform. As the particle size increases due to the aggregation, dispersion stability thereof decreases and thixotropy of the adhesive composition decreases, and as a result, the properties of products such as adhesives and the like may be deteriorated.

In addition, when the particle size of the fumed silica is adjusted to be too small, the interaction between the particles of the fumed silica is rapidly reduced, which may result in a decrease in the thixotropy in the adhesive composition or the like.

Therefore, it is still necessary to develop a technique for the fumed silica which can increase dispersibility thereof in the adhesive composition, increase the particle size uniformity, and ensure the excellent thickening and thixotropic effects, and a method for preparing the same.

### DISCLOSURE

### TECHNICAL PURPOSE

A purpose of the present disclosure is to provide fumed silica, wherein the fumed silica has high dispersibility and dispersion stability in an adhesive composition, has excellent uniformity due to controlled particle size, and may also ensure excellent thickening and thixotropic effects of the adhesive composition, and a method for efficiently preparing the same.

In addition, a purpose of the present disclosure is to provide fumed silica, wherein although the volume of the fumed silica as produced is compressed, the particle size of the fumed silica before the compression may be maintained to be substantially equal to the particle size of the fumed silica after the compression, such that the fumed silica has excellent transport (mobility) and storage properties, and a method for preparing the same.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

### TECHNICAL SOLUTION

In order to achieve the above purpose, according to one aspect of the present disclosure, fumed silica may be provided, wherein in a volume-based particle size distribution measured by a laser diffraction particle size distribution analyzer, a particle size D₉₀ of the fumed silica is in a range of 10 to 160 *µ*m, and the particle size distribution thereof exhibits a unimodal pattern, wherein a bulk density of the fumed silica is in a range of 10 to 150 g/L, wherein a surface of the fumed silica has been treated with a hydrophobic surface treatment agent.

The surface treatment agent may include at least one of silicon oil or a silane coupling agent.

The surface treatment agent may include at least one of polydimethylsiloxane (PDMS), dimethyldichlorosilane (DDS), octamathylcyclotetrasiloxane (D4), and hexamethyldisilazane (HMDZ).

The surface of the fumed silica has been treated using 3 to 30 parts by weight of the surface treatment agent based on 100 parts by weight of the fumed silica.

A specific surface area (BET) of the fumed silica may be in a range of 90 to 450 m²/g.

According to another aspect of the present disclosure, there is provided a method for preparing fumed silica, the method including (a) performing a surface treatment reaction of fumed silica by spraying a surface treatment agent in a liquid phase or a gas phase onto the fumed silica while stirring the fumed silica under an inert gas atmosphere at a temperature of 100 to 400° C for at least 1 hour; and (b) adding the fumed silica surface-treated in the (a) to a pulverizing apparatus to pulverize the fumed silica, wherein the fumed silica prepared in this way may satisfy the above characteristics of the fumed silica according to the one aspect of the present disclosure.

The surface treatment reaction in the (a) may be performed in a continuous or batch manner.

The inert gas may include at least one of nitrogen gas, neon gas, helium gas, or argon gas.

In still another aspect of the present disclosure, an adhesive composition including the fumed silica according to the above one aspect of the present disclosure and an adhesive resin may be provided.

The adhesive composition may contain 5 to 20 parts by weight of the fumed silica based on 100 parts by weight of the adhesive resin.

A viscosity of the adhesive composition measured in a state in which the fumed silica has been dispersed in the adhesive composition may be in a range of 100,000 to 8,000,000 cPs.

The adhesive resin may include an epoxy resin.

### TECHNICAL EFFECT

The fumed silica according to the present disclosure has an advantage of high dispersibility in the adhesive composition and excellent uniformity due to controlled particle size.

The fumed silica according to the present disclosure has an excellent thickening effect in the adhesive composition, and at the same time, can impart excellent thixotropy.

According to the produced fumed silica of the present disclosure, although the volume of the produced fumed silica is compressed, the particle size of the fumed silica before the compression may be maintained to be substantially equal to the particle size of the fumed silica after the compression, such that the fumed silica has excellent transport (mobility) and storage properties,

The method for preparing the fumed silica according to the present disclosure may efficiently prepare the fumed silica satisfying the above-described characteristics.

In addition to the above-described effects, the effects of the present disclosure will be described together while describing matters for implementing the present disclosure.

### BRIEF DESCRIPTION OF DRAWINGS

FIG. 1 shows a graph of comparison of viscosity measurements of Present Example 1, Comparative Example 1, and Comparative Example 2.
FIG. 2 illustrates a graph (horizontal axis: particle diameter (*µ*m), vertical axis: volume (%)) measured to identify a cumulative 90% particle size D₉₀ based on a volume using particle size distribution measurement of the fumed silica of Present Example 1.
FIG. 3 illustrates a graph (horizontal axis: particle diameter (*µ*m), vertical axis: volume (%)) measured to identify a cumulative 90% particle size D₉₀ based on a volume using particle size distribution measurement of the fumed silica of Present Example 2.
FIG. 4 illustrates a graph (horizontal axis: particle diameter (*µ*m), vertical axis: volume (%)) measured to identify a cumulative 90% particle size D₉₀ based on a volume using particle size distribution measurement of the fumed silica of Comparative Example 3.
FIG. 5 illustrates a graph (horizontal axis: particle diameter (*µ*m), vertical axis: volume (%)) measured to identify a cumulative 90% particle size D₉₀ based on a volume using particle size distribution measurement of the fumed silica of Comparative Example 4.
FIG. 6 shows a graph comparing bulk densities of Present Example 3-1 and Present Example 3-2 with each other.
FIG. 7 is a graph showing a comparison of the particle sizes D₉₀ of Present Example 3-1 and Present Example 3-2 with each other.

### DETAILED DESCRIPTIONS

The above-described objects, features, and advantages will be described in detail with reference to the accompanying drawings, and accordingly, a person having ordinary skill in the art to which the present disclosure pertains will be able to easily implement the technical idea of the present disclosure. In the description of the present disclosure, when it is determined that a detailed description of a known technology related to the present disclosure may unnecessarily obscure the gist of the present disclosure, the detailed description will be omitted. Hereinafter, preferred embodiments according to the present disclosure will be described in detail with reference to the accompanying drawings. In the drawings, the same reference numerals are used to indicate the same or similar components.

In describing the present disclosure, when it is determined that a detailed description of related known technologies may unnecessarily obscure the gist of the present disclosure, the detailed description thereof will be omitted.

In the present disclosure, when "includes", "has", "is made", "is disposed", "has", or the like are used, other parts may be added unless "only" is used. The expression of a component in a singular manner includes a plurally thereof unless otherwise specified.

In the present disclosure, in interpreting a numerical value, it is interpreted as including an error range even when there is no separate explicit description.

In the present disclosure, a bulk density (unit: g/L) is measured by putting fumed silica in a 100 mL mass cylinder according to a 100 mL scale and then measuring a weight.

In the present disclosure, the particle size analysis (particle size distribution analysis) is made by introducing a dispersion obtained by diluting 1 wt % of the fumed silica with ethanol into a laser diffraction particle size analyzer (equipment name: Beckman Coulter, LASER DIFFRACTION PARTICLE SIZE ANALYZER LS 13 320), and is based on an average value of a total of six measurements.

In the present disclosure, the viscosity is obtained by putting a 200 mL measurement target sample in a 250 mL beaker, waiting until the viscosity value is stabilized at 2 RPM using the SPINDLE LV4 64, and measuring the viscosity using a Brookfield viscometer (equipment name: Brookfield viscometer DV-II +Pro), and is based on the value measured at 25°C.

In the present disclosure, the specific surface area (BET) is based on a value analyzed by the BET method according to DIN 66131 under a nitrogen atmosphere using the BELSORP model.

Hereinafter, the present disclosure will be described in more detail.

### <Fumed silica>

In order to achieve the above purpose, the present disclosure may provide fumed silica, wherein in a volume-based particle size distribution measured by a laser diffraction particle size distribution analyzer, a particle size D₉₀ of the fumed silica is in a range of 10 to 160 *µ*m, and the particle size distribution thereof exhibits a unimodal pattern, wherein a bulk density of the fumed silica is in a range of 10 to 150 g/L, wherein a surface of the fumed silica has been treated with a hydrophobic surface treatment agent.

When the particle size of the fumed silica is adjusted to be too small, the interaction between the particles of the fumed silica is rapidly reduced, resulting in a decrease in thixotropy in the adhesive composition. On the other hand, when the particle size of the fumed silica is controlled to be too large, the dispersion stability of the fumed silica particles is deteriorated, so that precipitation occurs in the adhesive composition or layer separation occurs, and thixotropy is also reduced. In this regard, the particle size D₉₀ of the fumed silica of the present disclosure may be in a range of, for example, 10 to 160 *µ*m, for example, 50 to 150 *µ*m, and for example, 60 to 150 *µ*m.

In the present disclosure, the particle size of the fumed silica may be controlled such that the particle size distribution of the fumed silica exhibits a unimodal pattern. When the particle size distribution curve is checked using a laser diffraction particle size distribution analyzer, only a single peak existing within the measurement range may be interpreted as the unimodal pattern.

For example, in the fumed silica in which the particle size distribution of the fumed silica exhibits a bi-modal pattern or a multi-modal pattern, two or more types of particles having a relatively small particle diameter and particles having a relatively large particle diameter are mixed with each other. In this regard, the relatively small particles do not contribute to the imparting of thixotropy and thickening effects. The relatively large particles are vulnerable to change over time due to poor dispersibility thereof. When the relatively large particles are mixed with the adhesive composition, there is a problem in that property stability is deteriorated, for example, layer separation phenomenon or viscosity drop due to heat occurs. As a result, in order to achieve a desired degree of physical properties, a larger amount of the fumed silica should be added, and thus there is a problem in that the economic feasibility and workability of the process are deteriorated.

Based on a result of the particle size analysis of the fumed silica of the present disclosure, it was identified that the particle size distribution thereof exhibits the unimodal pattern. Thus, the problem of the fumed silica in which the particle size distribution thereof exhibits the bimodal pattern as described above may be suppressed. That is, the amount of useless fumed silica may be reduced. On the other hand, when the size of the particles in the particle size distribution is small or large, a desired effect may not be realized, and thus, the amount of useless fumed silica may be increased. The fumed silica of the present disclosure having only an optimum particle size capable of realizing the desired effect may be provided.

As described above, the particle size of the fumed silica of the present disclosure is controlled, and at the same time, the particle size distribution thereof exhibits the unimodal pattern such that the particle size uniformity is also controlled. Thus, a desired physical property may be realized even when a small amount of the fumed silica is added without mixing an excess amount of the fumed silica with the adhesive composition. Furthermore, the fumed silica of the present disclosure may also have the advantage that process workability and process efficiency may be improved in the subsequent process of mixing the fumed silica with the adhesive composition.

The bulk density of the fumed silica of the present disclosure is not particularly limited, but may be in a range of, for example, 10 to 150 g/L, for example, 15 to 100 g/L, for example, 20 to 80 g/L, for example, 30 to 50 g/L. The fumed silica of the present disclosure has a tendency to have slightly decrease in the bulk density when being subjected to pulverization, has a tendency to have increase in the bulk density when being subjected to compression. When the above range is satisfied, the fumed silica of the present disclosure may achieve the target purpose, and the property thereof may be appropriately adjusted.

The excellent dispersibility in which the fumed silica is well dispersed in the adhesive composition is required. Further, the excellent dispersibility is required to be stably maintained over time after initial dispersion and based on a temperature change according to a process. In this regard, the surface of the fumed silica of the present disclosure may be hydrophobically treated so as to have improved dispersion stability in the adhesive composition and improved workability, and so as to exhibit an appropriate thickening effect. In general, an epoxy resin used as an adhesive resin in a special adhesive may exhibit hydrophilicity. For this reason, in the present disclosure, a surface treatment is performed to hydrophobize a hydrophilic group (e.g., a hydroxyl group (-OH)) present on the surface of the fumed silica. The method for performing the hydrophobic surface treatment is not particularly limited. In one example, the surface may be hydrophobized and silylated using a silicone oil or a silane coupling agent, such as PDMS, DDS, D4, HMDZ, or the like. As a result, the density of -OH groups on the surface of the fumed silica decreases and the density of -CH₃ groups thereon increases, so that the number of hydrogen bonds generated from the -OH groups may be reduced. In the present disclosure, the degree of hydrophobization is not particularly limited, and may be adjusted according to the product to which the fumed silica is finally applied, and the purpose of the fumed silica.

In the present disclosure, the degree of hydrophobization may be measured using a method for detecting and quantifying CO₂ generated by burning a sample at 1000°C or higher in a O₂ gas stream using FlashEA 1112 Elemental Analyzer equipment available from Thermo Scientific company. In the present disclosure, the degree of hydrophobization of the surface-treated fumed silica may be in a range of carbon content, for example, 0.5 to 10%, for example, 3 to 7%, and for example, 4 to 6%.

According to an embodiment of the present disclosure, for example, 3 to 30 parts by weight of the surface treatment agent, for example, 5 to 25 parts by weight of the surface treatment agent, for example, 10 to 20 parts by weight of the surface treatment agent, based on 100 parts by weight of the fumed silica may be used in the surface treatment process. However, embodiments of the present disclosure are not necessarily limited thereto, and the amount of the surface treatment agent may be adjusted according to the type of the surface treatment agent as used.

In the present disclosure, when the specific surface area of the fumed silica is too small, the addition of a large amount of the fumed silica is required to exhibit a thickening effect, whereas when the specific surface area thereof is too large, the dispersibility thereof in the adhesive composition tends to decrease. In this regard, according to an embodiment of the present disclosure, the specific surface area (BET) of the fumed silica may be in a range, for example, 90 to 450 m²/g, and may be, for example, 150 to 250 m²/g.

In the present disclosure, the specific surface area of the fumed silica after the hydrophobization surface treatment is reduced compared to that before the hydrophobization surface treatment, and may be in a range of, for example, 50 to 350 m²/g, and may be in a range of, for example, 60 to 250 m²/g, and may be in a range of, for example, 80 to 150 m²/g.

### <Method for Preparing Fumed Silica>

In order to produce the fumed silica according to the present disclosure, provided is a method for producing the fumed silica, the method including (a) performing a surface treatment reaction of fumed silica by spraying a surface treatment agent in a liquid phase or a gas phase onto the fumed silica while stirring the fumed silica under an inert gas atmosphere at a temperature of 100 to 400° C for at least 1 hour; and (b) adding the fumed silica surface-treated in the (a) to a pulverizing apparatus to pulverize the fumed silica.

The step (a) is a surface treatment step of the fumed silica, and a surface treatment reaction may be performed at a specific temperature for a specific time duration while spraying the surface treatment agent in a liquid phase or a gas phase onto the fumed silica while stirring the fumed silica under an inert gas atmosphere.

The temperature at which the step (a) is performed may vary depending on the type of the selected surface treatment agent. For example, it may be a temperature of 100 to 400° C. For example, when the surface treatment agent is the PDMS, the temperature may be in a range of 330°C or lower.

The time duration for which the step (a) is performed refers to the surface treatment reaction time duration, which means a time duration for which the temperature range is maintained. The time duration may be, in a range of, for example, 1 to 5 hours, for example, 2 to 4 hours, but is not necessarily limited thereto, and may be adjusted according to the amount of the fumed silica to be surface-treated.

The method for performing the surface treatment reaction of the step (a) is not particularly limited, and may be performed, for example, in a continuous manner or a batch manner. In a specific example, when the batch manner is selected, a fluidization reactor, a mechanical fluidization reactor, or the like may be used as the batch reactor.

The inert gas in the step (a) may include at least one of nitrogen gas, neon gas, helium gas, or argon gas. It is preferable to use the nitrogen gas.

The step (b) may be performed after the step (a). The fumed silica introduced into the pulverizing apparatus in the step (b) is fumed silica whose the particle size is not controlled. It is general that the particle size D₉₀ exceeds 150 *µ*m. When the particle size is analyzed, the size distribution of the fumed silica introduced into the pulverizing apparatus exhibits various patterns such as a unimodal pattern, a bimodal pattern, a multimodal pattern. Thus, the particle size distribution is not uniform and is present in a state in which the particle size is not controlled to a specific value. Therefore, in the present disclosure, the particle size of the fumed silica is controlled using the pulverizing process, and specifically, in the volume-based particle size distribution measured by the laser diffraction particle size distribution analyzer, the particle size D₉₀ is in a range of 10 to 160 *µ*m and the particle size distribution of the fumed silica is controlled to exhibit the unimodal pattern, and the bulk density may be in the range of 10 to 150 g/L.

The pulverizing apparatus in the step (b) is not particularly limited as long as it can pulverize the fumed silica to a target size of the present disclosure. Any pulverizing apparatus known in the present technical field and capable of precisely adjusting the particle size is employed. For example, a pin mill, a disk mill, a bead mill, a blade mill, an air mill, a jet mill, a rod mill, a roller mill, a wheeler mill, a hammer mill, and the like may be used as the pulverizing apparatus, and the above-mentioned pulverizing apparatuses may be used in combination with each other.

### <Adhesive Composition>

The present disclosure may provide an adhesive composition including the fumed silica of the present disclosure and an adhesive resin.

According to an embodiment of the present disclosure, the fumed silica may be contained in the adhesive composition in an amount of, for example, 5 to 20 parts by weight, for example, 5 to 15 parts by weight based on 100 parts by weight of the adhesive resin. When the content of the fumed silica is lower than the above range, a thickening effect and a thixotropic effect are deteriorated. When the content of the fumed silica is greater than the above range, problems such as agglomeration between silica particles may occur. Further, when the content of the fumed silica is higher than the above range, the dispersion state of the silica particles is deteriorated, and thus desired physical properties are not achieved, or the physical properties are greatly changed over time, and thus the stability over time is deteriorated, and thus workability may be severely deteriorated.

The adhesive resin may include an epoxy resin having excellent adhesive strength in a special adhesive.

The viscosity of the adhesive composition measured in a state in which the fumed silica has been dispersed in the adhesive composition may be in a range of 100,000 to 8,000,000 cPs, and may be adjusted according to the final usage of the adhesive composition. For example, when the adhesive composition is used for an adhesive for a ship, the adhesive composition may have a relatively high viscosity in a range of 2,000,000 to 3,000,000 cPs. When the adhesive composition is used for an adhesive applied to a relatively light object such as a car, a home appliance, a solar panel, or the like, the adhesive composition may have a relatively low viscosity in a range of 100,000 to 150,000 cPs. However, the present disclosure is not limited thereto, and the viscosity of the adhesive composition may be adjusted according to a specific use thereof. The fumed silica of the present disclosure is advantageous in achieving a high viscosity of the adhesive composition.

The epoxy resin having a high viscosity which is generally used in the adhesive composition may be selected. However, when the epoxy resin having a too high viscosity is selected, there are limitations in that workability and productivity are deteriorated. There is no thixotropic property in the epoxy resin itself. Thus, the adhesive composition may include the fumed silica which may be generally used as an inorganic filler capable of functioning as a thickener and the thixotropic agent.

### EXAMPLES

Hereinafter, the present disclosure will be described in more detail with reference to Present Examples and Experimental Examples. However, the following Present Examples and Experimental Examples are merely to describe the present disclosure by way of example, and the contents of the present disclosure are not limited to the following Present Examples and Experimental Examples.

### <Experiment SET 1>

### Present Example 1

10 g of fumed silica hydrophobically treated by adding 21 g of PDMS to 100g of fumed silica (product name: KONASIL K-200) having a specific surface area of 200m²/g was taken and input and pulverized in an air-jet mill apparatus such that the particle size D₉₀ of the pulverized particle was 83 *µ*m and the size distribution thereof exhibited the unimodal pattern in the particle size analysis. The bulk density of the prepared fumed silica was 40g/L. In this way, the fumed silica was prepared. Then, 10 g of the surface-treated and pulverized fumed silica was mixed with 100g of an epoxy resin (product name: EPIKOTE 828) to prepare a sample of Present Example 1 of 110g.

### Comparative Example 1

A sample of Comparative Example 1 was prepared without adding the fumed silica to the epoxy resin unlike Present Example 1.

### Comparative Example 2

The fumed silica of Comparative Example 2 was prepared so as to be the same as in Present Example 1 except that the particle size of the fumed silica D₉₀ was 8 *µ*m. The bulk density of the prepared fumed silica of Comparative Example 2 was 12g/L. A sample of Comparative Example 2 was prepared by mixing with an epoxy resin with the fumed silica of Comparative Example 2 in the same manner as in Present Example 1.

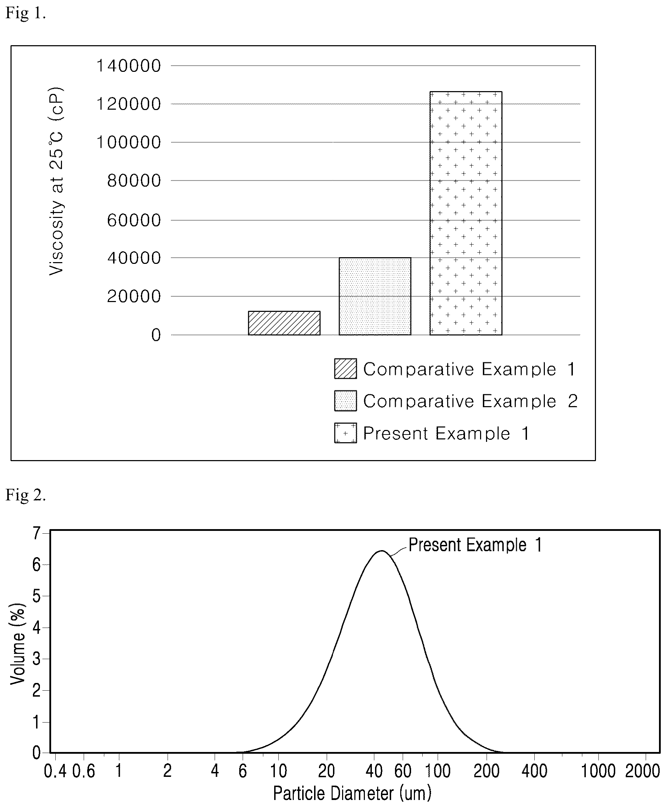

The viscosity of each of the samples of Present Example 1, Comparative Example 1, and Comparative Example 2 was measured and is shown in FIG. 1. The particle size D₉₀ and bulk density (g/L) of the fumed silica of each of Present Example 1, Comparative Example 1, and Comparative Example 2 and the measured viscosity (cPs) thereof are shown in Table 1 as set forth below.

**[Table 1]**

| Examples | Present Example 1 | Comparative Example 1 | Comparative Example 1 |
|---|---|---|---|
| Viscosity (cPs) | 12,000 | 40,000 | 126,000 |

Referring to FIG. 1 and Table 1, it was clearly identified that the fumed silica having the particle size as in Present Example 1 had a viscosity increasing effect when being added to an epoxy resin, whereas the viscosity increasing effect of the fumed silica of Comparative Example 2 which was excessively pulverized so as to have a small particle size was low when being added to the epoxy resin.

### <Experiment SET 2>

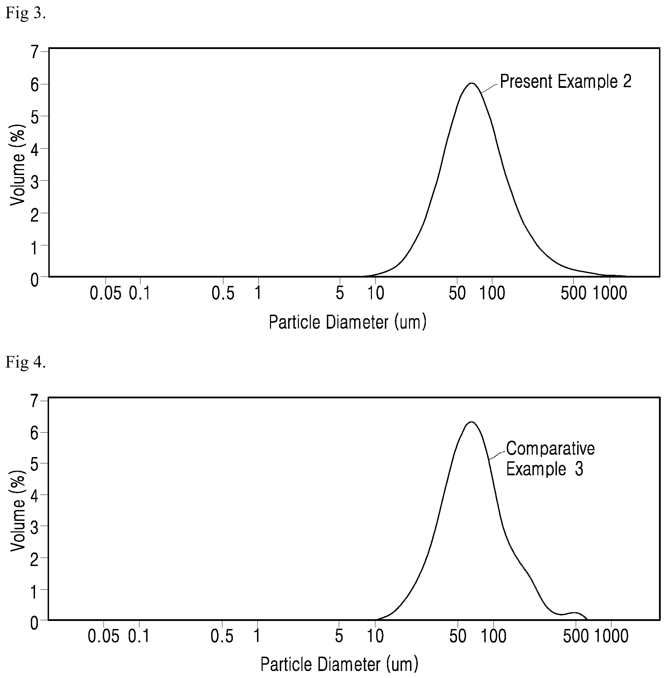

The particle sizes D₉₀ of the fumed silicas of Present Example 2, Comparative Example 3, and Comparative Example 4 were adjusted to be different from each other as described in Table 2, and the bulk densities thereof were also adjusted to be different from each other as described in the Table 2. Fumed silica of Present Example 2, Comparative Example 3, and Comparative Example 4 were used, respectively, and samples of Present Example 2, Comparative Example 3, and Comparative Example 4 were prepared by mixing the fumed silicas of Present Example 2, Comparative Example 3, and Comparative Example 4, respectively with the epoxy resin in the same manner as in Present Example 1. Then, the viscosity of each of the prepared samples was measured and shown in the Table 2 as set forth below. In addition, the particle size analysis result graphs of the fumed silicas of Present Example 1, Present Example 2, Comparative Example 3, and Comparative Example 4 are shown in FIGS. 2 to 5, respectively.

**[Table 2]**

| Examples | Particle sizes D₉₀ (*µ*m) | Bulk density (g/L) | Viscosity (cPs) |
|---|---|---|---|
| Present Example 1 | 83 | 40 | 126,000 |
| Present Example 2 | 144 | 41 | 118,000 |
| Comparative Example 3 | 170 | 44 | 80,000 |
| Comparative Example 4 | 8 | 12 | 40,000 |

Referring to the Table 2, it was clearly identified that the fumed silica of each of Present Examples 1 and 2 satisfying the particle size and the bulk density of the present disclosure increased the viscosity when being added to the epoxy resin, whereas the viscosity increase effect of the fumed silica of each of Comparative Examples 3 and 4 not satisfying the particle size and the bulk density of the present disclosure was low when being added to the epoxy resin.

### <Experiment SET 3>

### Present Example 3-1

The fumed silica of Present Example 3-1 was prepared in the same manner as in Present Example 1 such that the fumed silica of Present Example 3-1 had the particle size D₉₀ 25.3 *µ*m and the bulk density 26.2 g/L.

### Present Example 3-2

The fumed silica of Present Example 3-1 was compressed so as to have a bulk density of 70.9 g/L using compression equipment, thereby preparing the fumed silica of Present Example 3-2. Then, the particle size D90 of the compressed fumed silica was measured.

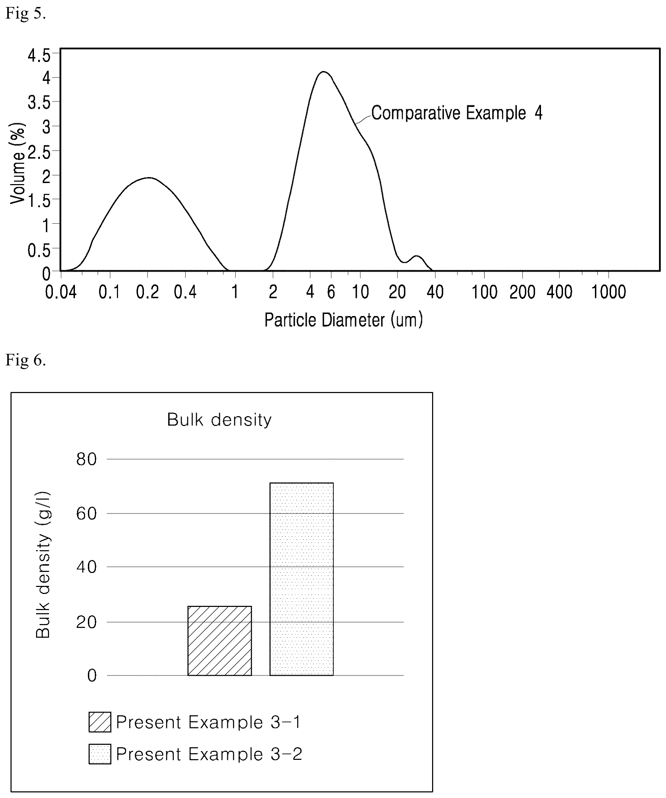

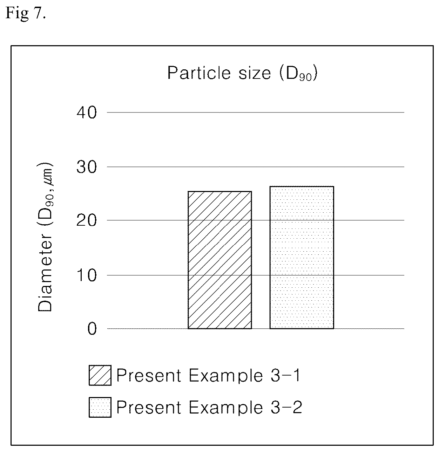

Graphs comparing the particle sizes (D₉₀) and the bulk densities of Present Example 3-1 and Present Example 3-2 with each other are shown in FIGS. 6 and 7, respectively, and the numerical values thereof are shown in Table 3 as set forth below.

**[Table 3]**

| Example | Particle sizes D₉₀ (*µ*m) | Bulk density (g/L) |
|---|---|---|
| Present Example 3-1 | 25.3 | 26.2 |
| Present Example 3-2 | 26.0 | 70.9 |

Referring to the Table 3, it was identified that the values of the particle size of the hydrophobic fumed silica based on the pulverizing technique in which dimethylsilyl group was formed on the surface thereof before the compression process and after the compression process were slightly different from each other.

The fumed silica exists in a particle state. Thus, the fumed silica is often supplied in a compressed state. For this reason, even under harsh conditions in which the compression is performed, the change in the particle size thereof should be small. When the particle size is maintained to be substantially constant during the compression, this may mean that long-term storage and stability are excellent.

Although the embodiments of the present disclosure have been described above in more detail with reference to the accompanying drawings, the present disclosure is not necessarily limited to such embodiments, and may be variously modified within the scope not departing from the technical spirit of the present disclosure. Therefore, the embodiments disclosed in the present disclosure are not for limiting the technical idea of the present disclosure, but for describing the technical idea, and the scope of the technical idea of the present disclosure is not limited by these embodiments. Therefore, it should be understood that the embodiments described above are merely examples in all aspects and the present disclosure are not limited thereto. The scope of protection of the present disclosure should be interpreted by the claims, and all technical ideas within the scope equivalent thereto should be interpreted as being included in the scope of the rights of the present disclosure.

## Claims

1. Fumed silica, wherein in a volume-based particle size distribution measured by a laser diffraction particle size distribution analyzer, a particle size D₉₀ of the fumed silica is in a range of 10 to 160 *µ*m, and the particle size distribution thereof exhibits a unimodal pattern,
wherein a bulk density of the fumed silica is in a range of 10 to 150 g/L,
wherein a surface of the fumed silica has been treated with a hydrophobic surface treatment agent.

2. The fumed silica of claim 1, wherein the surface treatment agent includes at least one of silicon oil or a silane coupling agent.

3. The fumed silica of claim 2, wherein the surface treatment agent includes at least one of polydimethylsiloxane (PDMS), dimethyldichlorosilane (DDS), octamathylcyclotetrasiloxane (D4), and hexamethyldisilazane (HMDZ).

4. The fumed silica of claim 1, wherein the surface of the fumed silica has been treated using 3 to 30 parts by weight of the surface treatment agent based on 100 parts by weight of the fumed silica.

5. The fumed silica of claim 1, wherein the fumed silica has a specific surface area (BET) of 90 to 450 m²/g.

6. A method for preparing fumed silica, the method comprising:
(a) performing a surface treatment reaction of fumed silica by spraying a surface treatment agent in a liquid phase or a gas phase onto the fumed silica while stirring the fumed silica under an inert gas atmosphere at a temperature of 100 to 400° C for at least 1 hour; and
(b) adding the fumed silica surface-treated in the (a) to a pulverizing apparatus to pulverize the fumed silica.

7. The method for preparing the fumed silica of claim 6, wherein in a volume-based particle size distribution measured by a laser diffraction particle size distribution analyzer, a particle size D₉₀ of the prepared fumed silica is in a range of 10 to 160 *µ*m, and the particle size distribution thereof exhibits a unimodal pattern,
wherein a bulk density of the prepared fumed silica is in a range of 10 to 150 g/L.

8. The method for preparing the fumed silica of claim 6, wherein the surface treatment agent includes at least one of silicon oil or a silane coupling agent.

9. The method for preparing the fumed silica of claim 8, wherein the surface treatment agent includes at least one of polydimethylsiloxane (PDMS), dimethyldichlorosilane (DDS), octamathylcyclotetrasiloxane (D4), and hexamethyldisilazane (HMDZ).

10. The method for preparing the fumed silica of claim 6, wherein 3 to 30 parts by weight of the surface treatment agent is used based on 100 parts by weight of the fumed silica.

11. The method for preparing the fumed silica of claim 6, wherein the surface treatment reaction in the (a) is performed in a continuous or batch manner.

12. The method for preparing the fumed silica of claim 6, wherein the inert gas includes at least one of nitrogen gas, neon gas, helium gas, or argon gas.

13. An adhesive composition comprising:
the fumed silica according to one of claims 1 to 5; and
an adhesive resin.

14. The adhesive composition of claim 13, wherein the adhesive composition contains 5 to 20 parts by weight of the fumed silica based on 100 parts by weight of the adhesive resin.

15. The adhesive composition of claim 13, wherein a viscosity of the adhesive composition measured in a state in which the fumed silica has been dispersed in the adhesive composition is in a range of 100,000 to 8,000,000 cPs.

16. The adhesive composition of claim 13, wherein the adhesive resin includes an epoxy resin.
